# EUROPÄISCHE PATENTSCHRIFT

(11) **EP 2 253 537 B1**
(45) Veröffentlichungstag und Bekanntmachung des Hinweises auf die Patenterteilung: **03.10.2018**
(21) Anmeldenummer: 10004998.0
(22) Anmeldetag: 12.05.2010
(51) Int. Cl.: B64C 39/02, G07C 5/08, B64F 5/00, B64F 5/60

(54) **Unbemannter Flugkörper**
Unmanned aircraft
Corps volant non piloté

(30) Priorität: 19.05.2009 DE 102009022007
(43) Veröffentlichungstag der Anmeldung: 24.11.2010
(73) Patentinhaber: MBDA Deutschland GmbH, 86529 Schrobenhausen (DE)
(72) Erfinder: Grabmeier, 83022 Rosenheim (DE)
(74) Vertreter: Isarpatent

(56) Entgegenhaltungen:
- EP-A1- 1 795 858
- EP-A1- 1 983 292
- EP-A2- 1 923 658
- DE-A1-102004 042 990

## Beschreibung

### TECHNISCHES GEBIET

Die Erfindung betrifft einen unbemannten Flugkörper mit zumindest einem Bordcomputer, auf dem eine operationelle Software für den Einsatzbetrieb des Flugkörpers abläuft, und einem damit verbundenen Programmspeicher, in dem die operationelle Software gespeichert ist.

### STAND DER TECHNIK

Unbemannte Flugkörper müssen von Zeit zu Zeit auf ihre Funktionsfähigkeit und Einsatzfähigkeit hin überprüft werden. Dazu werden eine Vielzahl von Tests der einzelnen Komponenten des Flugkörpers durchgeführt. Die für diese Tests erforderliche Testsoftware wird zunächst zusammen mit einem besonderen Prüf-Missionsplan in den Bordrechner des unbemannten Flugkörpers geladen. Dieser Ladevorgang dauert zirka 40 Minuten. Im Anschluss daran werden die Tests des Flugkörpers sowie eine Analyse der beim Test erzielten Ergebnisse und gegebenenfalls eine Fehlersuche durchgeführt. Nach Ende des Tests muss wieder die operationelle Software in den Bordrechner des unbemannten Flugkörpers geladen werden, was wiederum etwa 20 Minuten dauert.

Aus der GB 2 128 569 A ist eine in einem Luftfahrzeug vorgesehene Test- und Serviceeinrichtung bekannt, bei der ein Bordcomputer des Luftfahrzeugs mit einem im Luftfahrzeug ebenfalls vorgesehenen microprozessor-basierten Computersystem verbunden ist, an welches eine alphanumerische Anzeigeeinheit und eine Tastatur angeschlossen sind, die sich hinter einer leicht zugänglichen Klappe am Rumpf des Luftfahrzeugs verbergen. Das Bodenpersonal kann so bei der Wartung des Luftfahrzeugs nach dem Öffnen dieser Klappe das Computersystem bedienen und Meldungen von der Anzeigeeinheit ablesen.

Die EP 1 455 313 A1 offenbart ein System zur Analyse und Steuerung des Zustandes eines Luftfahrzeugs, bei welchem im Luftfahrzeug eine Mehrzahl von Überwachungseinrichtungen vorgesehen ist. Ein externer Computer kann an dieses Überwachungssystem des Luftfahrzeugs angeschlossen werden, um das Überwachungssystem zu bedienen und von ihm ausgegebene Meldungen erfassen zu können.
Aus der DE 101 53 151 A1 sind ein Diagnosesystem und ein Diagnoseverfahren zur Unterstützung der Flugzeugwartung bekannt, bei welchem im Flugzeug Sensoren vorgesehen sind, die jeweils mit einer Sendeeinrichtung verbunden sind. Ein außen in der Nähe der jeweiligen Sendeeinheit befindliches Computersystem kann die vom jeweiligen Sensor ausgesandten Daten empfangen und auswerten. Hierdurch wird eine drahtlose Zustandsüberwachung durch das Bodenpersonal ermöglicht.
Aus der EP 693 26 583 T2 sind ein Verfahren und eine Vorrichtung zur Flugkörper-Schnittstellenprüfung bekannt. Das dort offenbarte Flugkörper-Schnittstellensystem stellt die Verbindung zwischen einem (unbemannten) Flugkörper und einem Trägerflugzeug dar. Dabei wird eine von einer Bedienperson tragbare Steuereinheit verwendet, die mit der flugzeugeigenen Schnittstelle verbunden wird, um mittels der Steuereinheit die flugzeuginterne Hardware zu überprüfen.
Die EP 1 923 658 A2 zeigt ein Verfahren zur Überprüfung der Interaktionsfähigkeit zwischen einem Luftfahrzeug und einem mit diesem gekoppelten unbemannten Flugkörper. Sie offenbart den Oberbegriff des 1. Anspruchs und wird als nächstliegender Stand der Technik angesehen.

### DARSTELLUNG DER ERFINDUNG

Aufgabe der Erfindung ist es, einen gattungsgemäßen Flugkörper anzugeben, der es ermöglicht, dass er ohne größeren zeitlichen und apparativen Aufwand einem aussagekräftigen Funktionstest unterzogen werden kann.

Diese Aufgabe wird durch den im Patentanspruch 1 angegebenen unbemannten Flugkörper, das im Anspruch 5 angegebene Kit bestehend aus Flugkörper und externer Service- und Testeinrichtung, sowie die im Anspruch 11 angegebene Software gelöst.

Dazu ist im Programmspeicher des unbemannten Flugkörpers zusätzlich zur operationellen Software auch eine Testsoftware zur Überprüfung der Funktionsfähigkeit des Flugkörpers und/oder seiner Komponenten gespeichert, die zum Ablauf auf dem Bordcomputer des Flugkörpers ausgestaltet ist. Dadurch ist für die Überprüfung der Funktionsfähigkeit des Flugkörpers und/oder seiner Komponenten kein externer Steuerungsrechner mehr erforderlich. Des Weiteren ist es nicht mehr erforderlich, vor Beginn des einzelnen Tests zunächst eine Testsoftware in den Bordrechner des Flugkörpers zu laden und nach Ablauf des Tests wieder die operationelle Software in den Bordrechner des Flugkörpers zurückzuladen. Die im Stand der Technik vorgesehenen Ladezeiten können somit beim erfindungsgemäßen Flugkörper entfallen. Der erfindungsgemäße Flugkörper ist weiterhin mit einem externen Service-Gerät verbindbar, das eine für die Überprüfung erforderliche Testhardware aufweist und das von der auf den Bordcomputer des Flugkörpers laufenden Testsoftware steuerbar ist.

Im Gegensatz zum Stand der Technik muss der Flugkörper zur Durchführung der Tests somit lediglich mit einer Testhardware verbunden werden, die selbst aber von der bereits im Flugkörper vorhandenen Testsoftware gesteuert wird. Der gesamte Testablauf wird also vom Bordrechner des Flugkörpers selbst kontrolliert.

### VORTEILE

Vorzugsweise bilden die im Programmspeicher gespeicherte Testsoftware und die im Programmspeicher gespeicherte operationelle Software eine fusionierte Flugkörpersoftware. Diese fusionierte Software kann somit integral auf dem Bordrechner ablaufen. Eine fusionierte Software enthält sowohl einen operationellen Teil, als auch einen Testteil. Diese fusionierte Software ist mit einem Ladevorgang in den zugeordneten Computer ladbar und der Programmablauf verzweigt nach dem Starten der Software entweder in den operationellen Teil der Software oder in den Testteil der Software.
Es kann aber auch von Vorteil sein, die Testsoftware getrennt von der operationellen Software im Programmspeicher des Bordrechners abzuspeichern. In diesem Fall liegt nicht-fusionierte Software vor, nämlich eine operationelle Software und eine Testsoftware. Die operationelle Software und die Testsoftware werden in unterschiedliche Speicherbereiche des Programmspeichers geladen und sind unabhängig voneinander startbar. Das bringt den Vorteil mit sich, dass bei eventuellen Änderungen an der Testsoftware die sicherheitskritische operationelle Software nicht involviert ist und die operationelle Software nach Änderungen an der Testsoftware nicht erneut einer Sicherheitsüberprüfung unterzogen werden muss, was bei einer fusionierten Software erforderlich wäre. Vorzugsweise enthält die Testsoftware (beziehungsweise der Testteil der fusionierten Software) einen Prüf-Missionsplan. Ist der für den Test erforderliche Prüf-Missionsplan bereits im Bordrechner gespeichert, so kann auch die für das Laden des Prüf-Missionsplans vor Durchführung eines jeden Tests ansonsten erforderliche Zeit beim erfindungsgemäßen unbemannten Flugkörper eingespart werden.

Erfindungsgemäß sind von der im Bordcomputer des Flugkörpers ablaufenden Testsoftware (beziehungsweise vom Testteil der fusionierten Software) zumindest folgende Komponenten des Service-Geräts ansteuerbar:
- zumindest eine Durchfluss-Messeinrichtung für zumindest ein zum Flugkörper zuzuführendes Test-/Service-Fluid;
- zumindest ein schaltbares Ventil für das Test-/Service-Fluid;
- Schalt- und Regelungseinrichtungen für dem Flugkörper zuzuführende elektrische Energie;
- zumindest ein Trenntransformator zur Entkopplung extern zugeführter elektrischer Energie vom Stromnetz des Service-Geräts.

Ein besonderer Vorteil ergibt sich dann, wenn im Programmspeicher des Flugkörpers zumindest eine Trainingssoftware zur Simulation von Fehlern im Flugkörper vorgesehen ist, die zum Ablauf auf dem Bordcomputer des Flugkörpers ausgestaltet ist. Vorzugsweise ist die Trainingssoftware in die Testsoftware oder in die fusionierte Flugkörpersoftware integriert. Diese Ausgestaltung besitzt den Vorteil, dass die Ausbildung von Wartungspersonal an jedem mit der Testsoftware beziehungsweise der fusionierten Software versehenen unbemannten Flugkörper durchgeführt werden kann, ohne dass zusätzliche Software in den Bordcomputer des Flugkörpers eingespielt werden muss und ohne dass externe Trainingscomputer vorgesehen sein müssen.

Ein Kit aus Flugkörper und externer Service- und Testeinrichtung zeichnet sich dadurch aus, dass der Flugkörper zumindest einen Bordcomputer, auf dem eine operationelle Software abläuft, und einen damit verbundenen Programmspeicher, in dem die operationelle Software gespeichert ist, aufweist. Die Service- und Testeinrichtung weist ein Service-Gerät auf, das eine Testhardware enthält. Im Programmspeicher des Bordcomputers ist eine Testsoftware des Flugkörpers gespeichert, die zum Ablauf auf dem Bordcomputer des Flugkörpers ausgestaltet ist. Diese auf dem Bordcomputer des Flugkörpers ablaufende Testsoftware steuert unter anderem die externe Testhardware.

Der Vorteil besteht hierbei darin, dass die externe Testhardware keinen eigenständigen Computer für den Ablauf der Testsoftware mehr benötigt und somit kleiner und kostengünstiger ausgebildet sein kann.

Vorzugsweise bilden die im Programmspeicher gespeicherte Testsoftware und die im Programmspeicher gespeicherte operationelle Software eine fusionierte Flugkörpersoftware. Aber auch hier können die Testsoftware und die operationelle Software unabhängig voneinander im Programmspeicher des Bordcomputers des Flugkörpers gespeichert sein, wodurch Änderungen an der Testsoftware schneller und einfacher durchgeführt werden können, da solche Änderungen keine Auswirkungen auf die Zuverlässigkeit der operationellen Software haben. Vorzugsweise enthält die Testsoftware (beziehungsweise der Testteil der fusionierten Software) einen Prüf-Missionsplan.

Erfindungsgemäß weist das Service-Gerät zumindest die folgenden Hardware-Komponenten auf:
- zumindest eine Durchfluss-Messeinrichtung für zumindest ein zum Flugkörper zuzuführendes Test-/Service-Fluid;
- zumindest ein schaltbares Ventil für das Test-/Service-Fluid;
- Schalt- und Regelungseinrichtungen für dem Flugkörper zuzuführende elektrische Energie; und
- zumindest einen Trenntransformator zur Entkopplung extern zugeführter elektrischer Energie vom Stromnetz des Service-Geräts.
Vorzugsweise ist im Servicegerät als weitere Hardware-Komponente zumindest ein elektrischer Spannungswandler vorgesehen. Dies ermöglicht es, das Servicegerät auch im Feld einzusetzen, wo nur eine einzige elektrische Spannungsversorgung zur Verfügung steht. Der elektrische Spannungswandler übernimmt dann die Konvertierung dieser zur Verfügung stehenden elektrischen Spannung in die für die Durchführung des Tests am Flugkörper erforderlichen unterschiedlichen elektrischen Spannungen.

Im Service-Gerät kann als weitere Hardware-Komponente zumindest ein Schnittstellen-Konverter zur Konvertierung mit dem Flugkörper auszutauschenden Daten vorgesehen sein.

Eine andere bevorzugte Ausbildung dieses unbemannten Flugkörpers zeichnet sich dadurch aus, dass im Programmspeicher des Flugkörpers zumindest eine Trainingssoftware zur Simulation von Fehlern im Flugkörper vorgesehen ist, die zum Ablauf auf dem Bordcomputer des Flugkörpers ausgestaltet ist und die vorzugsweise in die Testsoftware oder in die fusionierte Testsoftware integriert ist.

Weiterhin ist die Erfindung auf eine Flugkörpersoftware für einen erfindungsgemäßen unbemannten Flugkörper gerichtet, wobei die Flugkörpersoftware eine operationelle Software und eine Testsoftware zum Testen des unbemannten Flugkörpers aufweist, die zu einer integralen Flugkörpersoftware fusioniert sind.

In die fusionierte Flugkörpersoftware kann bevorzugterweise eine Trainingssoftware zur Simulation von Fehlern im Flugkörper integriert sein.

Weiterhin kann in einer bevorzugten Ausgestaltungsform die fusionierte Flugkörpersoftware einen Prüf-Missionsplan enthalten.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen schematischen Testaufbau zum Prüfen eines erfindungsgemäßen Flugkörpers mittels einer Service- und Testeinrichtung;
- Fig. 2: zeigt ein vereinfachtes Schaubild, das die Kommunikationsbeziehungen des Bordcomputers wiedergibt.

### DARSTELLUNG VON BEVORZUGTEN AUSFÜHRUNGSBEISPIELEN

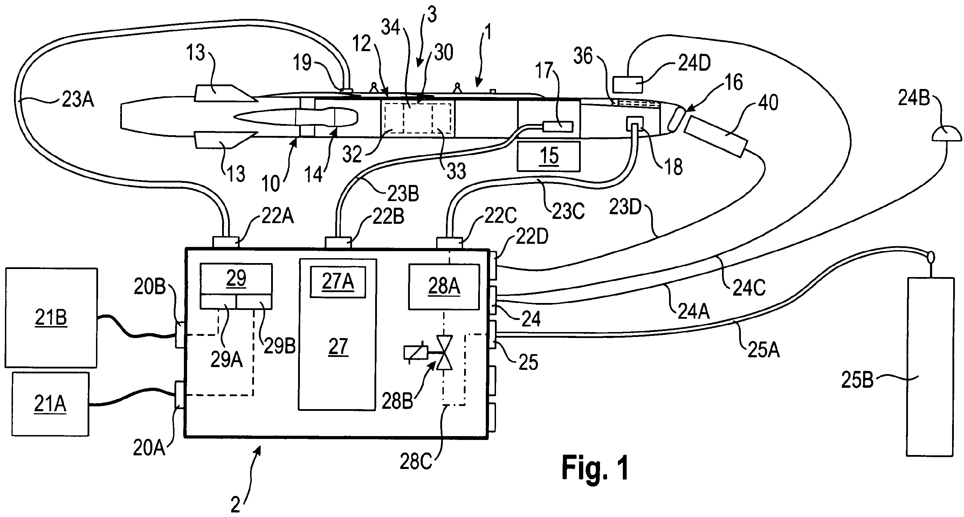

In Fig. 1 ist ein schematischer Testaufbau zum Prüfen eines erfindungsgemäßen Flugkörpers 1 mittels einer ein Servicegerät 2 aufweisenden Service- und Testeinrichtung dargestellt.

Der Flugkörper 1 umfasst einen eine Nutzlast aufnehmenden Rumpf 10, am Rumpf 10 angebrachte Tragflächen 12, zumindest eine Antriebseinrichtung, von der nur der rechte seitlich am Rumpf 10 vorgesehene Lufteinlass 14 der Antriebseinrichtung gezeigt ist, sowie Steuerflächen 13, die mittels nicht gezeigter Steuerflächenantriebe in bekannter Weise bewegbar am Rumpf 10 angebracht sind.

Der Flugkörper 1 ist weiterhin mit einer Avionik 3 versehen, die ebenfalls nur schematisch dargestellt ist und die sich im Inneren des Rumpfs 10 befindet. Die Avionik 3 enthält einen Bordcomputer 30, der neben wirksamen Verbindungen zu Navigationseinrichtungen auch einen Missionsdatenspeicher 32, einen Programmspeicher 33 sowie einen Steuerungsrechner 34 aufweist. Im Programmspeicher ist eine operationelle Software OP-SW gespeichert, die den Flugbetrieb des Flugkörpers 1 im Einsatz steuert. Des Weiteren ist im Programmspeicher 33 des Flugkörpers 1 eine Testsoftware T-SW zur Überprüfung der Funktionsfähigkeit des Flugkörpers und/oder seiner Komponenten gespeichert.

Der Steuerungsrechner 34 wird nach dem Absetzen des Flugkörpers 1 von einem Trägerluftfahrzeug vom Missionsdatenspeicher 32 mit Daten eines vorgegebenen Flugwegs und eines anzufliegenden Ziels versorgt und erhält weiterhin Navigationsdaten aus in herkömmlicher Weise vorgesehenen Navigationseinrichtungen, wie einem Satellitennavigationssystem 36 und/oder einem Trägheitsnavigationssystem. Aufgrund dieser Daten erzeugt der Steuerungsrechner 34 Steuersignale, die an die Steuerflächenantriebe geleitet werden, woraufhin diese die Steuerflächen 13 zu Steuerung des Flugkörpers 1 verstellen.

Der Flugkörper ist an seinem vorderen Ende mit einer der Zielerkennung dienenden Bilderfassungseinrichtung 16 versehen.

Im vorderen Rumpfbereich des Flugkörpers 1 ist im Inneren des Rumpfs 10 ein Schnittstellengerät (TLP) vorgesehen, das über eine hinter einer Rumpfklappe befindliche TLP-Schnittstelle 18 mit dem Service-Gerät 2 verbindbar ist.

An der Oberseite des Flugkörpers 1 ist eine weitere Schnittstelle 19 vorgesehen, über welche der Flugkörper 1 im Einsatz mit dem ihn tragenden Luftfahrzeug verbunden ist (Umbilical-Schnittstelle) und die im Fall der Erfindung zum Datenaustausch mit dem Service-Gerät 2 genutzt wird.

Schließlich ist der Flugkörper 1 mit einer Telemetrie-Schnittstelle 17 eines Telemetrie-Panels der Bordelektronik des Flugkörpers 1 versehen, die ebenfalls mit dem Service-Gerät 2 verbindbar ist. Diese Schnittstelle dient zum Laden von Daten in den Bildverarbeitungsrechner des Flugkörpers 1.

In dem in Fig. 1 schematisch gezeigten Testaufbau ist unterhalb des vorderen Rumpfbereichs des Flugkörpers 1 eine Verzögerungseinrichtung 15 für vom Flugkörper 1 ausgesandte Signale eines Radar-Höhenmessers vorgesehen. Die Verzögerungseinrichtung 15 für den Radarhöhenmesser besteht aus zwei Antennen, die über eine Verzögerungsleitung (RALT delay line) von definierter Länge (beispielsweise 31,6 m) miteinander verbunden sind. Der Radarhöhenmesser des Flugkörpers 1 emittiert in die erste Antenne, wobei die elektromagnetischen Impulse über die Verzögerungsleitung zur zweiten Antenne geleitet werden, die dann die Impulse an die Antenne des Radarhöhenmessers wieder abgibt. Wenn die Verzögerungseinrichtung 15 für den Radarhöhenmesser, wie in Fig. 1 gezeigt, unter diesem positioniert ist, kann im Flugkörper 1 geprüft werden, ob der Radarhöhenmesser die vorgegebene Verzögerungsleitung (im Beispiel 31,6 m) als gemessene Höhe ermittelt. Auf diese Weise kann mit der Verzögerungseinrichtung 15 für den Radarhöhenmesser die Messfunktion des Radarhöhenmessers getestet werden.

Das Service-Gerät 2 ist mit einem ersten Stromversorgungsanschluss 20A und einem zweiten Stromversorgungsanschluss 20B versehen. Der erste Stromversorgungsanschluss 20A ist dafür vorgesehen, mit einem herkömmlichen Wechselstromnetz 21A von 220 V verbunden zu werden, um die Verbraucher des Service-Geräts mit elektrischer Energie zu versorgen. Der zweite Stromversorgungsanschluss 20B ist dafür vorgesehen, an eine für Luftfahrzeuge übliche Stromversorgung 21B von 3 x 115 V 400 Hz angeschlossen zu werden.

Des Weiteren weist das Service-Gerät 2 einen ersten Datenanschluss 22A auf, der über ein Umbilical-Kabel 23A mit der Umbilical-Schnittstelle 19 des Flugkörpers 1 elektrisch verbunden ist. Ein am Service-Gerät 2 vorgesehner zweiter Datenanschluss 22B ist über ein sogenanntes TLP-Kabel 23B mit der Telemetrieschnittstelle 17 des Flugkörpers 1 elektrisch verbunden. Über das TLP-Kabel 23B wird neben der Übertragung von Daten auch eine elektrische Spannung von üblicherweise 28 V für den Flugkörper bereitgestellt.

Eine dritte am Service-Gerät 2 vorgesehene Datenschnittstelle 22C ist über ein TLP-Kabel 23C mit der TLP-Schnittstelle 18 des Flugkörpers 1 elektrisch und mechanisch verbunden. Dabei enthält sowohl die Schnittstelle 22C, als auch die Schnittstelle 18, als auch das TLP-Kabel 23C nicht nur elektrische Verbindungen, sondern auch eine Schlauchverbindung als Kühlfluidleitung für die Zuführung eines Kühlfluids vom Service-Gerät 2 zum Flugkörper 1, wie nachstehend noch beschrieben wird. Über die elektrischen Verbindungen des TLP-Kabels wird eine Verbindung zwischen dem Bordcomputer 30 des Flugkörpers 1 und dem Service-Gerät 2 hergestellt, über die ein Datenaustausch zwischen dem Bordcomputer 30 und dem Service-Gerät erfolgt. Die Kühlfluidleitung im TLP-Kabel transportiert aus dem Kühlfluidbehälter 25B in das Service-Gerät geführtes Kühlfluid zu einer im Flugkörper 1 vorgesehenen Kühleinrichtung für einen Infrarot-Zielsuchkopf der Bilderfassungseinrichtung 16, um diesen während der Durchführung der Tests zu kühlen.

Mittels der auf dem Bordcomputer 30 des Flugkörpers 1 laufenden Service- und Testsoftware, die im Programmspeicher 33 gespeichert ist, kann ein Missionsplan für eine vom Flugkörper zu fliegende Mission über das Service-Gerät 2 und die Datenleitungen im TLP-Kabel (ebenso wie über den Milbus des Umbilical-Kabels) in den Bordrechner 30 des Flugkörpers 1 geladen und dort im Missionsdatenspeicher 32 gespeichert werden. Unter Missionsdaten sind Daten zu verstehen, die der Flugkörper zur Erreichung seines Ziels benötigt, also Daten für die Navigation, die Flugbahn, aber auch Daten über anzufliegende Ziele, beispielsweise Bilder oder Modelle bestimmter Landmarken oder Bilder oder eine Modell des anzufliegenden Ziels.

Das Service-Gerät 2 ist über ein Stromversorgungskabel 23D, welches an einen Stromversorgungsanschluss 22D an das Service-Gerät 2 angeschlossen ist, mit einer Suchermaske 40 verbunden. Die Suchermaske 40 ist in dem in Fig. 1 gezeigten Testaufbau vor der Optik der Bilderfassungseinrichtung 16 angeordnet und liefert der Bilderfassungseinrichtung 16 ein entsprechendes Bild eines Ziels.

Die Suchermaske 40 ist beispielsweise mit eingravierten Zielkonturen versehen, die dem Zielbild beziehungsweise dem Zielmodell entsprechen, welches in einem Zielspeicher des Bordrechners 30 abgespeichert ist. Alternativ oder zusätzlich kann die Suchermaske 40 auch Landmarken-Bilder aufweisen, die im Missionsdatenspeicher 32 abgespeicherten Landmarken-Bildern entsprechen.

An einem GPS-Anschluss 24 des Service-Geräts 2 ist über ein erstes GPS-Kabel 24A eine GPS-Antenne 24B angeschlossen. Des Weiteren ist am GPS-Anschluss 24 ein weiteres GPS-Kabel 24C angeschlossen, welches mit einer ein Satellitennavigationssignal (GPS-Signal) aussendenden GPS-Abdeckung 24D wirksam verbunden ist, die über dem Satellitennavigationssystem 36 des Flugkörpers platziert ist. Das über die externe GPS-Antenne 24B gewonnene GPS-Rohsignal wird auch in das Umbilical-Kabel 23A eingespeist (zur Simulation des GPS-Signals vom Trägerflugzeug).

Ein Kühlfluidanschluss 25 des Service-Geräts ist über eine Kühlfluidleitung 25A mit einem Kühlfluidspeicher 25B derart verbunden, dass Kühlfluid aus dem Kühlfluidspeicher 25B durch die Kühlfluidleitung 25A und den Kühlfluidanschluss 25 in ein entsprechendes im Service-Gerät 2 vorgesehenes Leitungssystem 28C für das Kühlfluid fließen kann. Das Service-Gerät 2 enthält eine Durchfluss-Messeinrichtung 28A für das aus dem Kühlfluidspeicher 25B durch die Kühlfluidleitung 25A und den Kühlfluidanschluss 25 in das Service-Gerät 2 eingeleitete Kühlfluid, welches ein Test-/Service-Fluid bildet. Des Weiteren ist innerhalb des Serivce-Geräts 2 ein schaltbares Ventil 28B für das Kühlfluid in dem innerhalb des Service-Geräts 2 vorgesehenen Leitungssystem 28C für das Kühlfluid vorgesehen. Mittels des schaltbaren Ventils kann, gesteuert vom der auf dem Bordcomputer 30 laufenden Testsoftware (oder Service- und Testsoftware), der Kühlfluidstrom vom Vorratsbehälter 25B zum Flugkörper 1 geöffnet oder geschlossen oder entsprechend dosiert werden.

Das Service-Gerät 2 umfasst weiterhin elektrische Schalt- und Regelungseinrichtungen 29, in die externe elektrische Energie, welche durch die Anschlüsse 20A und/oder 20B zugeführt wird, eingeleitet wird und in Abhängigkeit von dem auf dem Bordcomputer 30 laufenden Testsoftware oder Service- und Testsoftware mit der erforderlichen Spannung und gegebenenfalls strombegrenzt an den Flugkörper 1 weitergeleitet wird. Die Schalt- und Regelungseinrichtungen 29 umfassen auch zumindest einen Trenntransformator 29A, 29B zur Entkoppelung der extern zugeführten elektrischen Energie vom Stromnetz des Service-Geräts.

Das Service-Gerät 2 benötigt zwar keinen eigenständigen Computer für den Ablauf der Testsoftware oder Service- und Testsoftware, kann aber einen internen Controller 27 aufweisen, über den die Kommunikation des Service-Geräts 2 mit der auf dem Bordrechner 30 des Flugkörpers 1 laufenden Software abgewickelt wird. Der Controller 27 ist mit einem Schnittstellenkonverter 27A verbunden, der den Controller an die standardisierten Schnittstellen des Flugkörpers 1 und von dessen Bordcomputer 30 adaptiert.

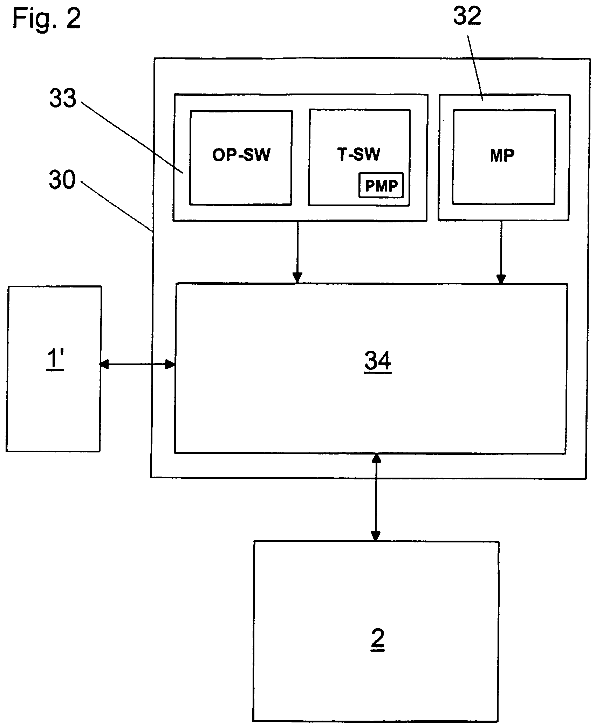

Fig. 2 zeigt ein vereinfachtes Schaubild, das die Kommunikationsbeziehungen des Bordcomputers wiedergibt. Der Bordcomputer 30 ist mit dem Programmspeicher 33 und dem Missionsdatenspeicher 32 verbunden. Im Programmspeicher 33 sind eine operationelle Software OP-SW und eine Testsoftware T-SW gespeichert. In der Testsoftware T-SW ist auch ein Prüf-Missionsplan PMP enthalten. Die Testsoftware kann zudem Komponenten enthalten, die einen Service des Flugkörpers unterstützen und es beispielsweise ermöglichen, neue Missionspläne in den Bordcomputer zu laden oder Bilddaten in einen Bildspeicher des Computers zu laden oder aus diesem abzurufen. Die Testsoftware wird dann zu einer Service- und Testsoftware.

Der Bordcomputer 30 enthält weiterhin einen Steuerungsrechner 34, der zum Datenaustausch mit dem Programmspeicher 33, dem Missionsdatenspeicher 32 und einem (nicht gezeigten) Bildspeicher des Flugkörpers 1 ausgestaltet ist. Des Weiteren steht der Steuerungsrechner 34 des Bordcomputers 30 über entsprechende Datenverbindungen in Kommunikationsverbindung mit dem Service-Gerät 2 sowie mit für den Betrieb des Flugkörpers 1 erforderlichen Flugkörperkomponenten, die hier zusammenfassend mit dem Bezugszeichen 1' bezeichnet sind. Im Einsatz des Flugkörpers und während der Einsatzbereitschaft ist die operationelle Software OP-SW aus dem Programmspeicher 33 in den Steuerungsrechner 34 des Bordcomputer 30 geladen und somit einsatzbereit.

Wird der Flugkörper jedoch einem Test oder einem Service unterzogen, so wird der Betriebszustand des Flugkörpers 1 und seines Bordcomputers 30 in einen Test- und Servicemode umgeschaltet, was beispielsweise über das externe Service-Gerät 2 erfolgen kann. Der Steuerungsrechner 34 lädt daraufhin die Testsoftware T-SW aus dem Programmspeicher 33 und der Test und/oder der Service des Flugkörpers 1 können durchgeführt werden. Nach Ablauf der Test-/Service-Sequenz wird der Betriebsmodus des Flugkörpers 1 und von dessen Bordcomputer 30 wieder in den Status der Einsatzbereitschaft umgeschaltet, woraufhin die operationelle Software wieder in den Steuerungsrechner 34 geladen wird.

### Bezugszeichenliste

Es bezeichnen:
- 1: Flugkörper
- 2: Service- und Testeinrichtung / Service-Gerät
- 3: Avionik
- 10: Rumpf
- 12: Tragflächen
- 13: Steuerflächen
- 14: Lufteinlass
- 15: Verzögerungseinrichtung
- 16: Bilderfassungseinrichtung
- 17: Telemetrie-Schnittstelle
- 18: TLP-Schnittstelle
- 19: Umbilical-Schnittstelle
- 20A: Stromversorgungsanschluss
- 20B: Stromversorgungsanschluss
- 21A: Wechselstromnetz
- 21B: Stromversorgung
- 22A: Datenanschluss
- 22B: Datenanschluss
- 22C: Datenschnittstelle
- 22D: Stromversorgungsanschluss
- 23A: Umbilical-Kabel
- 23B: TLP-Kabel
- 23C: TLP-Kabel
- 23D: Stromversorgungskabel
- 24: GPS-Anschluss
- 24A: GPS-Kabel
- 24B: GPS-Antenne
- 24C: GPS-Kabel
- 24D: GPS-Abdeckung
- 25: Kühlfluidanschluss
- 25A: Kühlfluidleitung
- 25B: Kühlfluidspeicher
- 27: Controller
- 27A: Schnittstellenkonverter
- 28A: Messeinrichtung
- 28B: Schaltbares Ventil
- 28C: Kühlfluidleitung / Leitungssystem
- 29: Regelungseinrichtungen
- 29A: Trenntransformator
- 29B: Trenntransformator
- 30: Bordcomputer
- 32: Missionsdatenspeicher
- 33: Programmspeicher
- 34: Steuerungsrechner
- 36: Satellitennavigationssystem
- 40: Suchermaske

## Patentansprüche

1. Unbemannter Flugkörper mit zumindest einem Bordcomputer (30), auf dem eine operationelle Software abläuft, und einem damit verbundenen Programmspeicher (33), in dem die operationelle Software gespeichert ist,
wobei im Programmspeicher (33) auch eine Testsoftware zur Überprüfung der Funktionsfähigkeit des Flugkörpers (1) und/oder seiner Komponenten gespeichert ist, die zum Ablauf auf dem Bordcomputer (30) des Flugkörpers (1) ausgestaltet ist,
wobei der Flugkörper (1) mit einem externen Service-Gerät (2) verbindbar ist, das für die Überprüfung erforderliche Testhardware aufweist, und
wobei die Testhardware des externen Service-Geräts (2) von der auf dem Bordcomputer (30) des Flugkörpers (1) laufenden Testsoftware steuerbar ist,
**dadurch gekennzeichnet,**
**dass** von der im Bordcomputer (30) des Flugkörpers (1) ablaufenden Testsoftware zumindest folgende Komponenten des Service-Geräts (2) ansteuerbar sind:
- zumindest eine Durchfluss-Messeinrichtung (28A) für zumindest ein zum Flugkörper (1) zuzuführendes Test-/Service-Fluid;
- zumindest ein schaltbares Ventil (28B) für das Test-/Service-Fluid;
- Schalt- und Regelungseinrichtungen (29) für dem Flugkörper (1) zuzuführende elektrische Energie;
- zumindest ein Trenntransformator (29A, 29B) zur Entkopplung extern zugeführter elektrischer Energie vom Stromnetz des Service-Geräts (2).

2. Unbemannter Flugkörper nach Anspruch 1,
**dadurch gekennzeichnet,**
**dass** die im Programmspeicher (33) gespeicherte Testsoftware und die im Programmspeicher (33) gespeicherte operationelle Software eine fusionierte Flugkörpersoftware bilden.

3. Unbemannter Flugkörper nach Anspruch 1 oder 2,
**dadurch gekennzeichnet,**
**dass** die Testsoftware einen Prüf-Missionsplan enthält.

4. Unbemannter Flugkörper nach einem der vorherigen Ansprüche,
**dadurch gekennzeichnet,**
**dass** im Programmspeicher (33) des Flugkörpers (1) zumindest eine Trainingssoftware zur Simulation von Fehlern im Flugkörper vorgesehen ist, die zum Ablauf auf dem Bordcomputer (30) des Flugkörpers (1) ausgestaltet ist und die vorzugsweise in die Testsoftware oder in die fusionierte Flugkörpersoftware integriert ist.

5. Unbemannter Flugkörper mit externer Service- und Testeinrichtung, die funktional mit dem Flugkörper verbindbar ist,
- wobei der Flugkörper (1) zumindest einen Bordcomputer (30), auf dem eine operationelle Software abläuft, und einen damit verbundenen Programmspeicher (33), in dem die operationelle Software gespeichert ist, aufweist,
- wobei die Service- und Testeinrichtung ein Service-Gerät (2) aufweist, das eine Testhardware enthält,
- wobei eine Testsoftware in dem dem Bordcomputer (30) zugeordneten Programmspeicher (33) des Flugkörpers (1) gespeichert ist und zum Ablauf auf dem Bordcomputer (30) des Flugkörpers (1) ausgestaltet ist, und
- wobei die Testhardware des Service-Geräts (2) vom Bordcomputer (30) des Flugkörpers (1) steuerbar ist;
**dadurch gekennzeichnet,**
**dass** das Service-Gerät (2) zumindest die folgenden Hardware-Komponenten aufweist:
- zumindest eine Durchfluss-Messeinrichtung (28A) für zumindest ein zum Flugkörper (1) zuzuführendes Test-/Service-Fluid;
- zumindest ein schaltbares Ventil (28B) für das Test-/Service-Fluid;
- Schalt- und Regelungseinrichtungen (29) für dem Flugkörper (1) zuzuführende elektrische Energie; und
- zumindest einen Trenntransformator (29A, 29B) zur Entkopplung extern zugeführter elektrischer Energie vom Stromnetz des Service-Geräts (2).

6. Unbemannter Flugkörper nach Anspruch 5,
**dadurch gekennzeichnet,**
**dass** die im Programmspeicher (33) gespeicherte Testsoftware und die im Programmspeicher (33) gespeicherte operationelle Software eine fusionierte Flugkörpersoftware bilden.

7. Unbemannter Flugkörper nach Anspruch 5 oder 6,
**dadurch gekennzeichnet,**
**dass** die Testsoftware einen Prüf-Missionsplan enthält.

8. Unbemannter Flugkörper nach einem der Ansprüche 5 bis 7,
**dadurch gekennzeichnet,**
**dass** im Service-Gerät (2) als weitere Hardware-Komponente zumindest ein elektrischer Spannungswandler vorgesehen ist.

9. Unbemannter Flugkörper nach einem der Ansprüche 5 bis 8,
**dadurch gekennzeichnet,**
**dass** im Service-Gerät (2) als weitere Hardware-Komponente zumindest ein Schnittstellen-Konverter (27A) zur Konvertierung von zwischen dem externen Computer (4) und dem Flugkörper (1) auszutauschenden Daten vorgesehen ist.

10. Unbemannter Flugkörper nach einem der Ansprüche 5 bis 9,
**dadurch gekennzeichnet,**
**dass** im Programmspeicher (33) des Flugkörpers (1) zumindest eine Trainingssoftware zur Simulation von Fehlern im Flugkörper vorgesehen ist, die zum Ablauf auf dem Bordcomputer (30) des Flugkörpers (1) ausgestaltet ist und die vorzugsweise in die Testsoftware oder in die fusionierte Testsoftware integriert ist.

11. Flugkörpersoftware, die auf einem Bordcomputer abläuft, zur Ausführung in einem unbemannten Flugkörper nach einem der vorhergehenden Ansprüche,
**dadurch gekennzeichnet,**
**dass** die Flugkörpersoftware eine operationelle Software und eine Testsoftware zum Testen des unbemannten Flugkörpers aufweist, die zur Flugkörpersoftware fusioniert sind.

12. Flugkörpersoftware gemäß Anspruch 11,
**dadurch gekennzeichnet,**
**dass** in die fusionierte Flugkörpersoftware eine Trainingssoftware zur Simulation von Fehlern im Flugkörper integriert ist.

13. Flugkörpersoftware gemäß Anspruch 11 oder 12,
**dadurch gekennzeichnet,**
**dass** in die fusionierte Flugkörpersoftware ein Prüf-Missionsplan integriert ist.

## Claims

1. Unmanned aircraft with at least one on-board computer (30) on which operational software runs, and an associated program memory (33) in which the operational software is stored, with test software also stored in the program memory (33) for checking the operating capability of the aircraft (1) and/or of its components, said test software being developed for running on the on-board computer (30) of the aircraft (1),
wherein the aircraft (1) can be connected to an external service device (2) which has the test hardware required for testing, and
wherein the test hardware of the external service device (2) can be controlled by the test software running on the on-board computer (30) of the aircraft (1),
**characterised in that** by means of the test software running on the on-board computer (30) of the aircraft (1) at least the following components of the service device (2) can be operated:
- at least a flow measurement device (28A) for at least a test/service fluid to be supplied to the aircraft (1);
- at least a switchable valve (28B) for the test/service fluid;
- switching and control devices (29) for electrical energy to be supplied for the aircraft (1);
- at least an isolating transformer (29A, 29B) for isolating externally supplied electrical energy from the power network of the service device (2).

2. Unmanned aircraft according to claim 1, **characterised in that** the test software stored in the program memory (33) and the operational software stored in the program memory (33) comprise merged aircraft software.

3. Unmanned aircraft according to claim 1 or 2, **characterised in that** the test software contains a test mission plan.

4. Unmanned aircraft according to any one of the preceding claims, **characterised in that** in the program memory (33) of the aircraft (1) at least training software is provided for simulating faults in the aircraft which is developed for running on the on-board computer (30) of the aircraft (1) and is preferably integrated into the test software or into the merged aircraft software.

5. Unmanned aircraft with an external service and test device which can be functionally connected to the aircraft,
- wherein the aircraft (1) has at least an on-board computer (30) on which operational software runs, and an associated program memory (33) in which the operational software is stored,
- wherein the service and test device has a service device (2) which contains test hardware,
- wherein test software is stored in the program memory (33) of the aircraft (1) associated with the on-board computer (30) and is developed for running on the on-board computer (30) of the aircraft (1), and
- wherein the test hardware of the service device (2) can be controlled by the on-board computer (30) of the aircraft (1);
**characterised in that**
the service device (2) has at least the following hardware components:
- at least a flow measurement device (28A) for at least a test/service fluid to be supplied to the aircraft (1);
- at least a switchable valve (28B) for the test/service fluid;
- switching and control devices (29) for the electrical energy to be supplied to the aircraft (1); and
- at least an isolating transformer (29A, 29B) for isolating externally supplied electrical energy from the power network of the service device (2).

6. Unmanned aircraft according to claim 5, **characterised in that** the test software stored in the program memory (33) and the operational software stored in the program memory (33) comprise merged aircraft software.

7. Unmanned aircraft according to claim 5 or 6, **characterised in that** the test software contains a test mission plan.

8. Unmanned aircraft according to any one of claims 5 to 7, **characterised in that** at least an electrical voltage transformer is provided in the service device (2) as a further hardware component.

9. Unmanned aircraft according to any one of claims 5 to 8, **characterised in that** at least an interface converter (27A) is provided in the service device (2) as a further hardware component for converting data to be exchanged between the external computer (4) and the aircraft (1).

10. Unmanned aircraft according to any one of claims 5 to 9, **characterised in that** in the program memory (33) of the aircraft (1) at least training software is provided for simulating faults in the aircraft and is developed for running on the on-board computer (30) of the aircraft (1) and is preferably integrated into the test software or into the merged test software.

11. Aircraft software which runs on an on-board computer for execution in an unmanned aircraft according to any one of the preceding claims, **characterised in that** the aircraft software has operational software and test software for testing the unmanned aircraft, the two being merged to provide the aircraft software.

12. Aircraft software according to claim 11, **characterised in that** training software for simulating faults in the aircraft is integrated into the merged aircraft software.

13. Aircraft software according to claim 11 or 12, **characterised in that** a test mission plan is integrated into the merged aircraft software.

## Revendications

1. Missile sans pilote comprenant au moins un ordinateur de bord (30), sur lequel un logiciel opérationnel est exécuté, et une mémoire de programme (33) reliée à celui-ci et dans laquelle le logiciel opérationnel est enregistré, dans lequel, dans la mémoire de programme (33) un logiciel de test est également enregistré pour vérifier la fonctionnalité du missile (1) et/ou de ses composants et est développé pour fonctionner sur l'ordinateur de bord (30) du missile (1),
dans lequel le missile (1) peut être relié à un appareil de service externe (2) qui présente le matériel de test nécessaire à la vérification, et
dans lequel le matériel de test de l'appareil de service externe (2) peut être commandé par le logiciel de test exécuté sur l'ordinateur de bord (30) du missile (1), **caractérisé en ce**
**qu'**au moins les composants suivants de l'appareil de service (2) peuvent être actionnés par le logiciel de test exécuté dans l'ordinateur de bord (30) du missile (1) :
- au moins un moyen de mesure de débit (28A) pour au moins un fluide de test/service à acheminer jusqu'au missile (1) ;
- au moins une soupape commutable (28B) pour le fluide de test/service ;
- des moyens de commutation et de régulation (29) pour l'énergie électrique à acheminer jusqu'au missile (1) ;
- au moins un transformateur d'isolement (29A, 29B) pour découpler du réseau électrique de l'appareil de service (2) l'énergie électrique acheminée de manière externe.

2. Missile sans pilote selon la revendication 1, **caractérisé en ce**
**que** le logiciel de test enregistré dans la mémoire de programme (33) et le logiciel opérationnel enregistré dans la mémoire de programme (33) forment un logiciel de missile fusionné.

3. Missile sans pilote selon la revendication 1 ou 2, **caractérisé en ce**
**que** le logiciel de test contient un plan de mission d'essai.

4. Missile sans pilote selon une des revendications précédentes, **caractérisé en ce**
**que**, dans la mémoire de programme (33) du missile (1) au moins un logiciel d'entraînement est prévu pour la simulation d'erreurs dans le missile, est développé pour être exécuté sur l'ordinateur de bord (30) du missile (1) et est intégré de préférence dans le logiciel de test ou dans le logiciel de missile fusionné.

5. Missile sans pilote comprenant un moyen de service et de test externe, qui peut être relié en fonctionnement au missile,
- dans lequel le missile (1) présente au moins un ordinateur de bord (30), sur lequel un logiciel opérationnel est exécuté, et une mémoire de programme (33) reliée à celui-ci et dans laquelle le logiciel opérationnel est enregistré,
- dans lequel le moyen de service et de test présente un appareil de service (2) qui contient un matériel de test,
- dans lequel un logiciel de test est enregistré dans la mémoire de programme (33) du missile (1) associée à l'ordinateur de bord (30) et est développé pour être exécuté sur l'ordinateur de bord (30) du missile (1), et
- dans lequel le matériel de test de l'appareil de service (2) peut être commandé par l'ordinateur de bord (30) du missile (1) ;
**caractérisé en ce**
**que** l'appareil de service (2) présente au moins les composants matériels suivants :
- au moins un moyen de mesure de débit (28A) pour au moins un fluide de test/service à acheminer jusqu'au missile (1) ;
- au moins une soupape commutable (28B) pour le fluide de test/service ;
- des moyens de commutation et de régulation (29) pour l'énergie électrique à acheminer jusqu'au missile ; et
- au moins un transformateur d'isolement (29A, 29B) pour découpler du réseau électrique de l'appareil de service (2) l'énergie électrique acheminée de manière externe.

6. Missile sans pilote selon la revendication 5, **caractérisé en ce**
**que** le logiciel de test enregistré dans la mémoire de programme (33) et le logiciel opérationnel enregistré dans la mémoire de programme (33) forment un logiciel de missile fusionné.

7. Missile sans pilote selon la revendication 5 ou 6, **caractérisé en ce**
**que** le logiciel de test contient un plan de mission d'essai.

8. Missile sans pilote selon une des revendications 5 à 7, **caractérisé en ce**
**qu'**au moins un transformateur de tension électrique est prévu dans l'appareil de service (2) en tant que composant matériel supplémentaire.

9. Missile sans pilote selon une des revendications 5 à 8, **caractérisé en ce**
**qu'**au moins un convertisseur d'interfaces (27A) est prévu dans l'appareil de service (2) en tant que composant matériel supplémentaire pour convertir des données à échanger entre l'ordinateur externe (4) et le missile (1) .

10. Missile sans pilote selon une des revendications 5 à 9, **caractérisé en ce**
**qu'**au moins un logiciel d'entraînement est prévu dans la mémoire de programme (33) du missile (1) pour la simulation d'erreurs dans le missile, est développé pour être exécuté sur l'ordinateur de bord (30) du missile (1) et est intégré de préférence dans le logiciel de test ou dans le logiciel de test fusionné.

11. Logiciel de missile qui est exécuté sur un ordinateur de bord pour être mis en oeuvre dans un missile sans pilote selon une des revendications précédentes, **caractérisé en ce**
**que** le logiciel de missile présente un logiciel opérationnel et un logiciel de test pour tester le missile sans pilote et qui sont fusionnés dans le logiciel de missile.

12. Logiciel de missile selon la revendication 11, **caractérisé en ce**
**que**, dans le logiciel de missile fusionné, est intégré un logiciel d'entraînement pour la simulation d'erreurs dans le missile.

13. Logiciel de missile selon la revendication 11 ou 12, **caractérisé en ce**
**que**, dans le logiciel de missile fusionné, est intégré un plan de mission d'essai.
